Europäisches Patentamt

European Patent Office

Office européen des brevets

(19)

(11) Veröffentlichungsnummer: **0 151 655
B1**

(12) # EUROPÄISCHE PATENTSCHRIFT

(45) Veröffentlichungstag der Patentschrift:
**13.07.88**

(51) Int. Cl.⁴: **F 16 D 11/00,** D 03 C 1/00

(21) Anmeldenummer: **84100901.2**

(22) Anmeldetag: **28.01.84**

(54) **Keilkupplung einer Rotations-Schaftmaschine.**

(43) Veröffentlichungstag der Anmeldung:
**21.08.85 Patentblatt 85/34**

(45) Bekanntmachung des Hinweises auf die Patenterteilung:
**13.07.88 Patentblatt 88/28**

(84) Benannte Vertragsstaaten:
**CH DE FR GB IT LI**

(56) Entgegenhaltungen:
**DE - B - 1 535 257
DE - B - 1 535 258
DE - B - 2 036 643
DE - B - 2 036 646
US - A - 3 804 128**

(73) Patentinhaber: **Stäubli AG (Stäubli SA) (Stäubli Ltd.),
Seestrasse 240, CH-8810 Horgen-Zürich (CH)**

(72) Erfinder: **Schwarz, Rudolf, Bergstrasse 37,
Horgen-Zürich (CH)**

(74) Vertreter: **Rossel, Albert, Dipl.-Ing. ETH, Postfach,
CH-8023 Zürich (CH)**

## Beschreibung

Die Erfindung betrifft eine Keilkupplung gemäss Oberbegriff des Patentanspruches 1.

Einerseits sind durch die DEW-B 1 535 257 und 1 535 258 Rotations-Hubeinheiten zur Betätigung der Schäfte einer Webmaschine bekannt geworden, bei welchen Hubeinheiten die Kupplung zwischen Antriebswelle und Exzenterring mittels zwei, an und für sich einzeln beweglichen, nebeneinanderliegenden und auf die gleiche Nut einer Antriebswelle wirkenden Keilen erfolgt, wobei die Keile ein gemeinsames Steuerorgan aufweisen. Die Hauptcharakteristik ist jedoch, dass jeder Keil unter der Wirkung einer vorgespannten Feder in die Nut einrastet. Der Vorteil dieser Ausführungen besteht in der Möglichkeit einer gewissen Vorsteuerung, indem der eine Keil bereits in die Nut eingesteuert werden kann, bevor sich diese voll vor den Keilen befindet.

Andererseits sind durch die DE-B 2 036 643 und 2 036 646 Rotations-Hubeinheiten zur Betätigung der Schäfte einer Webmaschine bekannt geworden, bei denen ein einziger Keil der Kupplung dient und das Schwenken über einen schwenkbaren Schaltarm mit einem Schaltring im Mittelbereich erfolgt, von welchem der Keil während eines Stillstandes der Antriebswelle gesteuert wird. In der Praxis weist dieser Keil ebenfalls Federn auf, von welchen er während des Umschwenkens mit der Antriebswelle gehalten wird.

Bei den erstgenannten Maschinentypen besteht der Nachteil darin, dass die Federn, um eine rasche Bewegung der Keile zu gewährleisten, kräftig und entsprechend gross dimensioniert sein müssen. Nach oben ist ihre Dimensionierung dadurch begrenzt, dass sie innerhalb der Dicke einer Hubeinheit, z.B. die üblichen 12 mm, anzuordnen sind.

Ausgehend von der DE-B 1 535 258 ist es die Aufgabe der Erfindung, eine Keilkupplung zu schaffen, mit welcher eine hohe Drehzahl der Antriebswelle erreicht werden kann und die die genannten Nachteile, insbesondere den Einbau von Federn zur Beeinflussung der Keile, eliminiert.

Dies wird bei der genannten Keilkupplung durch die im kennzeichnenden Teil des Patentanspruches 1 genannten Merkmale erreicht.

Eine solche Anordnung weist beispielsweise zwei Keile pro Hubeinheit und keine Federn zu ihrer Betätigung auf: Einen ersten Keil, der über eine erste Leitschiene eines in drei Stellungen um die Antriebswelle bewegbaren Steuerarms gesteuert wird, wobei er, sowohl beim Kuppelvorgang, als auch bei seiner Schwenkung um je 180°, ständig von der Leitschiene geführt wird; einen zweiten Keil, der von einer zweiten Leitschiene des Schaltringes passiv gesteuert wird, einerseits durch sein Ablenken beim Auskuppelvorgang aus dem Bereich der Längsnut der Antriebswelle, wo er als Gegenstütze für den ersten Keil wirkt und andererseits durch sein Ablenken beim Einkuppelvorgang zum Einrasten in die Längsnut, wobei er während der Schwenkung um 180° ständig gegen eine Führung anliegt.

Diese Anordnung ermöglicht das Einleiten der Kupplungsvorgänge vor Beginn bzw. Beenden der Rotation der Antriebswelle um 180°, was die Steuerzeiten bezüglich des Arbeitstaktes der Hubeinheit reduziert.

In der Zeichnung ist ein Ausführungsbeispiel der Erfindung dargestellt. Es zeigen

Fig. 1 und 2 je eine Draufsicht auf eine Hubeinheit einer erfindungsgemässen Rotations-Schaftmaschine, wobei Fig. 1 eine Bewegungs- und Fig. 2 eine Stillstandsphase mit dem Kupplungsvorgang zeigt,

Fig. 3 eine Draufsicht, und

Fig. 4 eine Seitenansicht des Schaltarmes mit den direkt angeschlossenen Teilen,

Fig. 5 bis 7 je einen Schnitt durch den Ring des Schaltarmes, gemäss den Linien V, VI und VII in Fig. 3,

Fig. 8 eine Draufsicht auf den zwischen Antriebswelle und Kurbelstange angeordneten Exzenterring,

Fig. 9 in grösserem Massstabe eine Draufsicht auf einen Teilausschnitt der Kupplungsstelle des einen der zwei Mitnehmerkeile, und

Fig. 10 eine Schnittansicht nach der Linie X—X in Fig. 9,

Fig. 11 in grösserem Massstabe eine Draufsicht auf einen Teilausschnitt der Kupplungsstelle des anderen Mitnehmerkeils, und

Fig. 12 eine Schnittansicht nach der Linie XII—XII in Fig. 11.

Der Grundaufbau der Hubeinheit mit Rotationsantrieb entspricht ungefähr einem der Ausführungsbeispiele nach der CH-A 512 605. Sämtliche für die erfindungsgemässe Funktion nicht wesentlichen Teile der Schaftmaschine, wie auch deren Gehäuse, sind zeichnerisch nicht dargestellt.

Zwischen der kontinuierlich oder intermittierend rotierenden Antriebswelle 1 mit zwei diametral zueinander angeordneten Längsnuten 15 und einer Kurbelstange 3 sitzt, frei rotierbar, jedoch achsial nicht verschiebbar, der zwei annähernd radial verlaufende Fenster 25 und 250 für die gleitbare Lagerung der beiden Mitnehmerkeile 5, 50 aufweisende Exzenterring 2, auf welchem sich, von der Antriebswelle 1 aus betrachtet, hinter den Fenstern 25, 250, zwei über die Seitenfläche axial vorstehende Nasen 26 befinden. An der Antriebswelle 1 sind zwei diametral zueinander verlaufende Längsnuten 15 angeordnet. Über den Bolzen 43 ist die Kurbelstange 3 gelenkig mit dem auf der Achse 40 schwenkbar sitzenden, einarmigen Schwinghebel 4, an welchem der Verbindungsstab 49 zum nicht dargestellten Webschaft einer Webmaschine angehängt ist, verbunden.

Der die Keilkupplung steuernde, in seinem Mittelbereich einen Schaltring 66 aufweisende Schaltarm 6 sitzt schwenkbar auf der Achse 60. Sein freies Ende ist über die Lasche 76 mit dem vorzugsweise von einer Musterkarte gesteuerten Steuerwerk 7 verbunden.

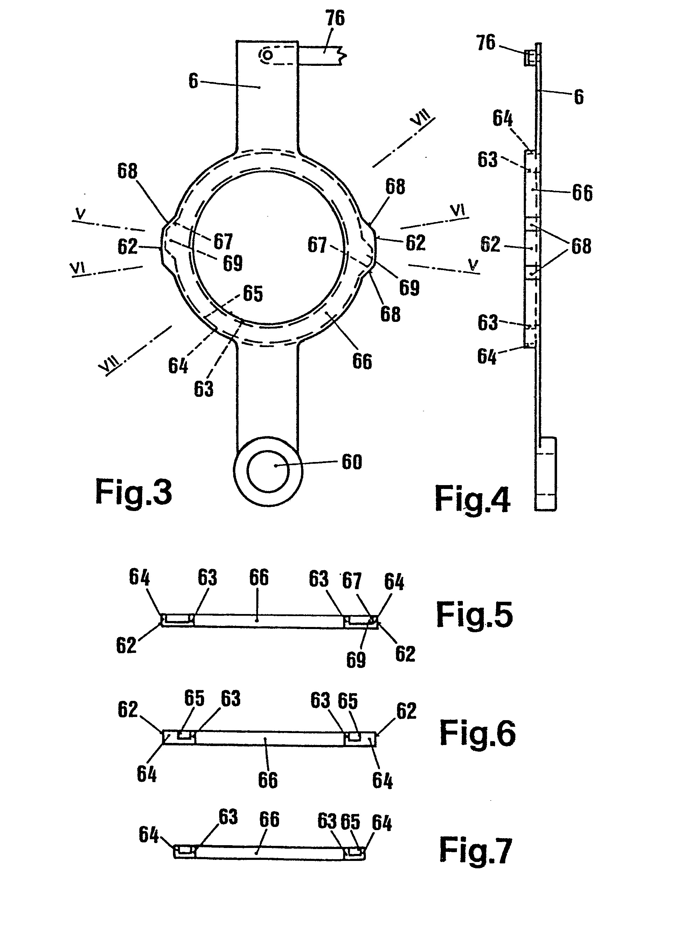

Wie die Fig. 5 bis 7, 10 und 12 zeigen, weist der effektive Ringteil des Schaltringes 66, im Querschnitt und über den ganzen Umfang betrachtet, eine unterschiedliche U-Form auf. Im Bereich des Einrastens der Keile 5, 50 in die Nuten 15 der Antriebswelle 1, weist der Schaltring 66 beidseitig je einen die Peripherie überragenden Nocken 62 auf, der dazu bestimmt ist, zwecks Arretierung des Exzenterringes 2 in seiner ausgekuppelten Stellung, in die durch die beiden Nasen 26 des Exzenterringes gebildete Kerbe 27 einzurasten.

Der sich am Innenrand des Schaltringes 66 befindende Schenkel der U-Form dient als erste steuernde Leitschiene 63 für den ersten Keil, den Mitnehmerkeil 5 und ist als innerer, in eine Gleitnut 53 des Mitnehmerkeils eingreifender, den Mitnehmerkeil 5 bei seiner Schwenkbewegung sowie seinem Ein- und Auskuppeln aktiv und direkt steuernder Kragen ausgebildet. Der sich am Aussenrand des Schaltringes befindende Schenkel der U-Form dient als zweite Leitschiene 64 für den zweiten Keil, den Rückhaltekeil 50 und ist als äusserer, im Bereich der radial vorstehenden Nocken 62 je eine Ausbuchtung 69 aufweisender Kragen ausgebildet, wobei die Tiefe jeder Ausbuchtung mindestens der Tiefe T der Wellen-Längsnut 15 entspricht.

Die beiden Keile 5, 50 sind von verschiedener Form. Ihre beiden inneren Enden weisen, spiegelsymmetrisch zur Mittelaxe zwischen dem Mitnehmerkeil 5 und dem Rückhaltekeil 50 bzw. den Fenstern 25, 250, je eine schräg verlaufende Flanke 55 bzw. 550 auf. Die einander abgewandten Längsseiten 52, 520 der beiden Keile verlaufen parallel zueinander und parallel zur vorgenannten, gleichzeitig die Mittellinie der Wellennut 15 bildenden Mittelaxe 75.

Der in Drehrichtung der Antriebswelle 1 betrachtete erste, als Mitnehmer des Exzenterringes wirkende Keil 5, weist in seinem Mittelbereich eine dem Radius des Kragens der inneren Leitschiene 63 entsprechend gebogen verlaufende Gleitnut 53 für die Aufnahme dieses Kragens auf. Im Vergleich zum eine schräge Flanke 55 aufweisenden Ende des Keils, ist sein Mittelteil als nach unten reichender, als axiale Längsführung im Fenster 25 gleitbar eingreifender Block 54 ausgebildet.

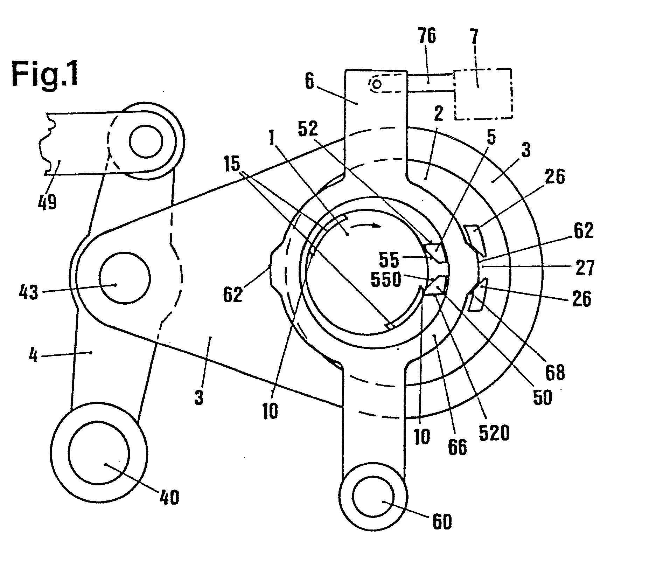

Der in Drehrichtung der Antriebswelle 1, s. Pfeil Fig. 1, betrachtete zweite, als Rückhalt oder Gegenhalter gegenüber dem Mitnehmerkeil in der Wellennut 15 arbeitende Keil 50, wirkt nicht mit dem inneren Kragen der ersten Leitschiene 63 zusammen. Seine Gleitnut 530 ist aus diesem Grunde sehr breit ausgebildet. Sein äusseres Ende weist jedoch eine Verdickung 560 auf, welche bei der durch den Exzenterring 2 ausgelösten Schwenkbewegung dieses Keils 50 mit ihrer Anschrägung 570 gegen die die Ausbuchtung 69 bildende Rampe 67 der zweiten äusseren Leitschiene 64 anschlägt, wodurch der Keil radial nach innen verschoben wird.

Ausserhalb der Ausbuchtungen 69 ist die innere Wand 65 der zweiten Leitschiene 64 als Führung ausgebildet, gegen die der abgerundete äussere Endteil 590 der Verdickung 560 des Rückhaltekeils 50 während seiner Schwenkbewegung anliegt. Die Länge dieses Keils entspricht deshalb der Distanz zwischen der Innenkante 65 der zweiten Leitschiene 64, über den Bereich ausserhalb der Ausbuchtungen 69 einerseits und dem Boden der Längsnuten 15 andererseits.

Nachfolgend wird die Funktion der in ihrem Grundaufbau beschriebenen Hubeinheit und deren Arbeitsweise näher erläutert.

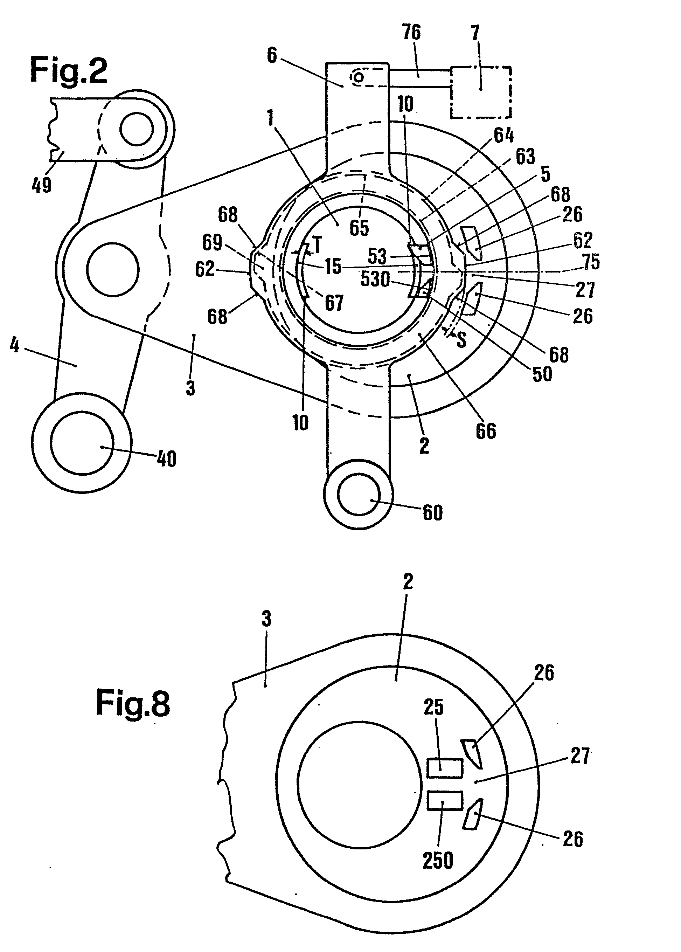

Fig. 1 zeigt die Stellung nach einer Rotation der Antriebswelle um ca. 45° gegenüber der Kupplungsstellung, im vorliegenden Fall gegenüber der Entkupplungsstellung, bei der der Mitnehmerkeil 5 von der ersten Leitschiene 63 des Schaltarms 6, bzw. der Rückhaltekeil 50 von der nachlaufenden Kante 10 der Wellennut 15 radial nach rechts verschoben wurde und die Hubeinheit den Webschaft in der Hochfachstellung arretiert hält. Der Mitnehmerkeil 5 wird vom inneren Kragen der ersten Leitschiene 63 des Schaltringes 66 gehalten, während der Rückhaltekeil 50 mit seinem inneren Ende auf der Antriebswelle 1 gleitend aufliegt. Durch das Anliegen der Verdickung 560 des äusseren Endes 590 des Rückhaltekeils 50 an der Rampe 67 des äusseren Kragens, verbleibt der Rückhaltekeil 50 mit seinem äusseren Endteil 590 in der Ausbuchtung der zweiten Leitschiene 64 des Schaltringes 66, welche Stellung als Folge der Rückkopplung der Steuerbewegung des Schaltringes auf den Mitnehmerkeil 5 erreicht wird. Gleichzeitig rastet der periphere Nocken 62 des Schaltringes in die Kerbe 27 zwischen den Nasen 26 ein und hält den Exzenterring 2 formschlüssig gegen ein durch event. Reibung mit der Antriebswelle 1 verursachtes Mitdrehen zurück. Diese Stillstandsstellung wird beibehalten, bis die nächste Längsnut 15 der Antriebswelle in den Bereich der rechts liegenden Keile gelangt. Sobald das Vorbeigleiten der Nut 15 vor dem Mitnehmerkeil 5 beginnt, was gleichbedeutend mit dem Einnehmen der Raststellung der Antriebswelle 1 ist, kann, sofern ein Wechsel des Webschaftes in das Tieffach erfolgen soll, der Schaltarm 6 im Gegenuhrzeigersinn um die feste Achse 60 in seine Mittelstellung (Fig. 2) geschwenkt werden, was für den mitgenommenen Mitnehmerkeil 5 einen etwas längeren Weg als die Distanz T bedeutet, wobei T der Tiefe der Nut 15 entspricht. Es erfolgt der Eingriff des Keils 5 in die Nut 15. Der Schaltring 66 liegt nun konzentrisch zur Antriebswelle 1. In dieser Raststellung wird die Antriebswelle praktisch kurz angehalten. Sie kann aber auch kontinuierlich weiterrotieren. Der Mitnehmerkeil 5 wird von der nachfolgenden Seitenkante 10 der Längsnut 15 mitgenommen. Über diesen, mit seinem Block 54 im Fenster 25 gelagerten Keil 5, wird der Exzenterring 2 und damit über den im zweiten Fenster 250 gleitbar gelagerten Block 540 des Rückhaltekeils 50 dieser Keil mitgenommen. Dabei trifft dieser mit seinem äusseren, abgerundeten Ende 590 gegen die Rampe 67 der inneren Wand 65 des Kragens der zweiten Leitschiene 64 und wird vor der Rampe, zum Eingreifen in die Nut 15, radial nach innen abgelenkt. Die Mitnahme des Exzenterringes erfolgt vom aktiv gesteuerten Mitnehmerkeil 5 aus, wobei dieser, in radialer Richtung, vom Kragen der ersten Leitschiene 63 des in seiner Gleitnut 53 liegenden Schaltringes gehalten wird. Der Rückhaltekeil 50 befindet sich mit seinem inneren Ende in der Nut 15, während die äussere Endverdickung 560 mit dem gerundeten Endteil 590 entlang der inneren Wand 65 des Kragens der zweiten Leitschiene 64 gleitet. Der Keil ist also indirekt oder passiv gesteuert und tritt bei Verschwenken des Exzenterringes 2 erst in Funktion, wenn dieser während seinem Schwenken nicht mehr beschleunigt, sondern verzögert wird. Der Keil verhindert ein Voreilen bzw. einen unruhigen Lauf des Exzenterringes gegenüber der Antriebswelle 1 bzw. deren Nut.

Soll der Webschaft nach einer Rotation der Antriebswelle 1 um 180° seine Stellung wiederum wechseln, verbleibt der Schaltarm 6 in seiner gleichen, d.h. der Mittelstellung, bei welcher der Schaltring 66 konzentrisch zur Antriebswelle 1 steht.

Soll hingegen ein Fachwechsel des Webschaftes erfolgen, wird, nachdem die Antriebswelle eine annähernde Rotation von 180° ausgeführt hat, der Schaltarm 6 im Gegenuhrzeigersinn nach links verschwenkt, wodurch der Mitnehmerkeil 5 radial nach aussen gesteuert wird. Aufgrund des durch das Ausrasten dieses Keils 5 ausgelösten Stillstandes des Exzenterringes 2, trifft nun bei der Weiterrotation der Antriebswelle 1 die nachlaufende Seitenkante 10 der Nut 15 auf die schräge Flanke 550 des Rückhaltekeils 50 und drückt diesen radial nach aussen, was dadurch möglich ist, dass sich vor dem äusseren Ende 590 des Keils eine Ausbuchtung 69 des Kragens der zweiten Leitschiene 64 befindet und somit der Rückhaltekeil am Weiterschwenken verhindert wird und mit dem in die Kerbe 27 eingreifenden Nocken 62 des Schaltringes 66 die Haltefunktion übernimmt. Praktisch könnte jedoch der nur durch seine Lagerung im Fenster 25 gehaltene erste Keil weiterschwenken.

Der vorbeschriebenen Funktionsweise kann entnommen werden, dass die erfindungsgemässe Keilkupplung einer Steuerung des die effektive Mitnahme des Exzenterringes 2 auslösenden Mitnehmerkeils 5 bereits vor dem vollen Ankommen bzw. Einfahren der Nut 15 an den Kupplungsort möglich ist, was eine Verkürzung der Steuerzeit ermöglicht. Statt um 180° intermittierend, kann die Antriebswelle auch kontinuierlich arbeiten, da auch das Anhalten des Exzenterringes durch den in die Ausbuchtung zu liegen kommenden Rückhaltekeil ausserhalb des direkten Kupplungszeitpunktes erfolgt.

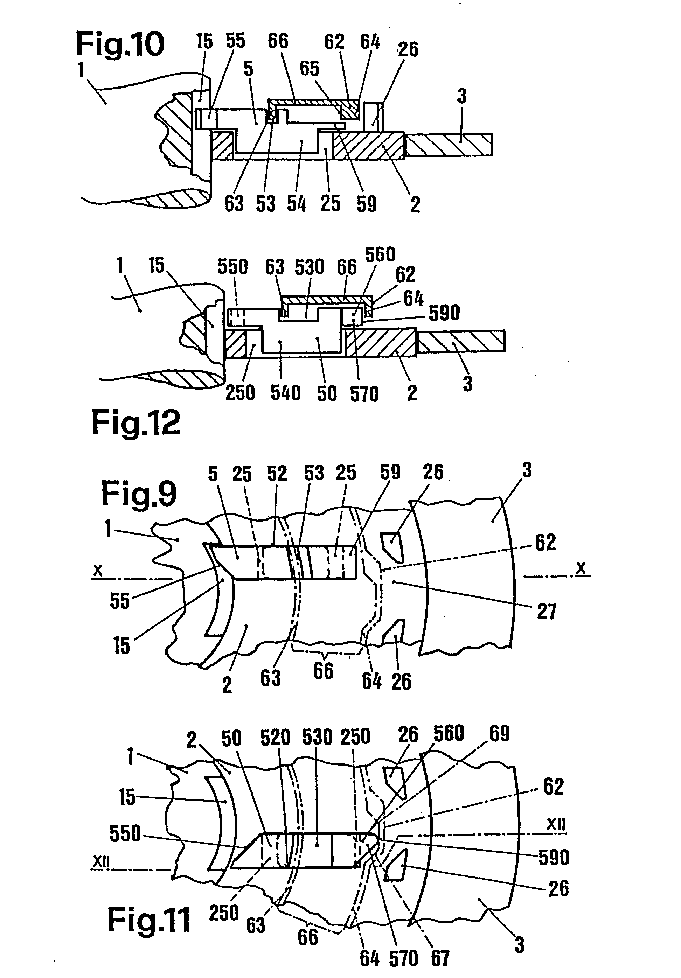

Die Figuren 9 und 10 zeigen den von der ersten Leitschiene 63 des Schaltringes 66 geführten, in die Wellennut 15 der Antriebswelle 1 eingerasteten Mitnehmerkeil 5, welches Einrasten vor Einnahme der vollen Raststellung der Antriebswelle 1 mit der Wellennut 15, erfolgt.

Anstelle des Nockens 62 kann das gegenüber der Antriebswelle 1 abgewandte Ende 59 des Mitnehmerkeils 5 so weit unter dem Schaltring 66 radial herausragend verlängert sein, dass es in ausgefahrener Stellung des Keils in eine Kerbe eingreift, wobei die die Kerbe bildenden Nasen anstatt am Exzenterring 2, nun an der Kurbelstange 3 angeordnet sind und das Arretieren des Exzenterringes 2 nicht direkt durch die Nocken 62 des Schaltarms 6, sondern über das Fenster 25, in welchem der festgehaltene Keil 5 gelagert ist, erfolgt, was sowohl in der Tieffach- als auch in der Hochfachstellung möglich ist.

Die Figuren 11 und 12 zeigen den sich ausserhalb des Eingriffes in die Wellennut 15 der Antriebswelle 1 befindenden Rückhaltekeil 50, unbeeinflusst von der ersten Leitschiene 63. Befindet sich die Antriebswelle 1 in der Stillstandsphase oder der Exzenterring 2 in Arretierstellung, bleibt dieser Keil 50 ungesteuert.

In den Figuren 9 und 11 ist der Schaltring 66, zwecks klarerer Darstellung, strichpunktiert eingezeichnet.

Damit der Exzenterring 2 ungehindert verschwenken, jedoch der Steuerweg der Keile 5, 50 kurz gehalten werden kann, ist die Freiraumdistanz S zwischen den Nasen 26 und dem Kopf des Nockens 62 vorzugsweise kleiner als die Tiefe T der Längsnuten 15 bemessen. Die Neigung der Seitenflächen 68 der Nocken 62 ist derart, dass einer der Nocken vor Erreichen der vollen Raststellung der Längsnut 15 der Antriebswelle 1 in die Kerbe 27 einfahren kann.

Damit je nach 180° Rotation der Antriebswelle 1 eine Umkupplung erfolgen kann, ist der Schaltarm in drei Stellungen steuerbar.

Die Kupplung arbeitet trotz Vorsteuerung gänzlich ohne Feder, womit eine wesentliche Fehlerquelle eliminiert wird und erhebliche Kosten und Unterhaltspesen eingespart werden können. Lediglich die fixen Nasen 26 des Exzenterringes 2 können aus Sicherheitsgründen gefedert sein. Die Hubeinheit arbeitet nur bei Rotation der Antriebswelle in Pfeilrichtung (Fig. 1).

**Patentansprüche**

1. Keilkupplung zwischen der Antriebswelle (1) und auf ihr frei drehbar gelagertem Exzenterring (2) einer Rotations-Schaftmaschine, wobei auf dem Exzenterring, ebenfalls frei drehbar, eine Kurbelstange (3) sitzt und die Kupplung einen steuernden Schaltarm (6) mit einem zur Antriebswelle annähernd konzentrischen, in einer radialen Ebene zur Antriebswelle hin- und herschwenkbaren Schaltring (66), sowie zwei auf die gleiche Nut (15) der Antriebswelle wirkende, im Exzenterring annähernd radial bewegbar gelagerte Keile (5, 50) aufweist, wobei der eine Keil (5) der Mitnahme des Exzenterringes und der andere Keil (50) dem Zurückhalten des Exzenterringes bzw. der Spielfreihaltung des Mitnehmerkeils (5) in der Nut (15) der Antriebswelle (1) dient und der Mitnehmerkeil (5) direkt und der Rückhaltekeil (50) indirekt als Rückkopplung gesteuert werden, dadurch gekennzeichnet, dass der Schaltring (66) zwei, je mit einem Keil (5, 50) zusammenwirkende Leitschienen (63, 64) aufweist, wobei die erste Leitschiene (63) direkt in den Mitnehmerkeil (5) eingreift und so mit dem Schwenken des Schaltringes das Ein- und Auskuppeln zwischen Exzenterring (2) und Antriebswelle (1) steuert und die zweite Leitschiene (64) nur mit ihrer Innenwand (65) am Rückhaltekeil (50) anliegt, der sich aufgrund seiner Umfangsbewegung mit dem Exzenterring (2) bei in die Nut (15) eingerastetem Mitnehmerkeil (5) aus einer Ausbuchtung (69) der Innenwand (65) der Leitschiene (64) herausbewegt und damit nach innen zum Einrasten in die gleiche Nut (15) verschoben wird und der nach dem Ausrasten des Mitnehmerkeils (5) aus der Nut (15) durch deren umlaufende Kante (10) wieder in die Ausbuchtung (69) zurückgeschoben wird, wenn der Schaltring (66) über einen radial nach aussen vorstehenden Nocken (62) in eine Kerbe (27) des Exzenterringes (2) einrastet und diesen blockiert.

2. Keilkupplung einer Rotations-Schaftmaschine nach Anspruch 1, dadurch gekennzeichnet, dass die federlosen Keile (5, 50) gezwungene Ein- und Auskuppelbewegungen ausführen.

3. Keilkupplung einer Rotations-Schaftmaschine nach Anspruch 2, dadurch gekennzeichnet, dass die einander abgewandten Seiten (52 bzw. 520) der beiden Keile (5, 50) parallel zueinander und parallel zur dazwischenliegenden Mittelaxe (75), welche gleichzeitig Mittellinie der einrastbereiten Wellennut (15) ist, liegen und die Distanz dieser beiden Seiten (52 bzw. 520) höchstens der Breite der Wellennut, über den Umfang der Welle gemessen, entspricht.

4. Keilkupplung einer Rotations-Schaftmaschine nach Anspruch 2 oder 3, dadurch gekennzeichnet, dass die erste Leitschiene (63) des Schaltringes (66) in der Mittelstellung bei in eine Wellennut (15) eingerasteten und mit der Antriebswelle (1) umlaufenden Mitnehmerkeilen (5, 50) konzentrisch zur Antriebswelle liegt, wobei die Leitschiene ständig in eine Gleitnut (53) des ersten Keils (5) eingreift.

5. Keilkupplung einer Rotations-Schaftmaschine nach Anspruch 2 oder 3, dadurch gekennzeichnet, dass die zweite Leitschiene (64) des Schaltringes (66) in der Mittelstellung des Schaltarms (6), d.h. der Stellung bei in eine Wellennut (15) eingerasteten und mit der Antriebswelle (1) umlaufenden Keilen (5, 50), annähernd über ihren ganzen Umfang konzentrisch zur Antriebswelle liegt und im Bereich der einrastbereiten Wellennuten (15) je eine zur Bewegungsrichtung der Antriebswelle verlaufende Ausbuchtung (69), vorzugsweise mit zwei seitlichen Rampen (67) zur Umsteuerung des Rückhaltekeils (50) aufweist.

6. Keilkupplung einer Rotations-Schaftmaschine nach Anspruch 5, dadurch gekennzeichnet, dass die Länge des Rückhaltekeils (50) grösser ist als die Distanz zwischen der Innenkante (65) der zweiten Leitschiene (64), ausserhalb der Ausbuchtungen (69), und der Mantelfläche der Antriebswelle (1).

7. Keilkupplung einer Rotations-Schaftmaschine nach Anspruch 3, dadurch gekennzeichnet, dass die einander zugewandten Seitenflächen der beiden Keile (5, 50) je am inneren Ende abgeschrägt sind.

8. Keilkupplung einer Rotations-Schaftmaschine nach einem der Ansprüche 1 bis 7, dadurch gekennzeichnet, dass an der Peripherie des Schaltringes (66), diametral gegenüberliegend, je ein Nocken (62) und in dessen Bereich am Exzenterring (2) zwei eine Kerbe (27) für diese Nocken bildende Nasen (26) angeordnet sind.

## Claims

1. A key coupling between the drive shaft (1) and eccentric ring (2) of a rotary dobby, the eccentric ring being freely rotatably mounted on the drive shaft, wherein a connecting rod (3) is located on the eccentric ring, likewise freely rotatably, and the coupling comprises a controlling switching arm (6) with a switching ring (66) which is approximately concentric to the drive shaft and is swingable to and fro in a plane radial to the drive shaft, and two keys (5, 50) acting in the same groove (15) of the drive shaft and movably guided in the eccentric ring approximately radially, one key (5) serving to entrain the eccentric ring and the other key (50) serving to hold back the eccentric ring and keep the entraining key (5) in the groove (15) of the drive shaft (1) without free play, the entraining key (5) being controlled directly and the hold back key (50) being controlled indirectly as back coupling, characterised in that the switching ring (66) has two guide rails (63, 64) each co-operating with a key (5, 50), of which the first guide rail (63) engages directly in the entraining key (5) and controls the coupling and uncoupling of the eccentric ring (2) and the drive shaft (1) and the second guide rail (64) engages the hold back key (50) only with its inner wall (65), which key (50) is shifted out of an indentation (69) of the inner wall (65) of the guide rail (64) as a result of its circumferential movement with the eccentric ring (2) and the entraining key (5) engaged in the groove (15) and thereby moved inwardly into engagement with the same groove (15), and is moved back again into the indentation (69) via a rotating edge (10) of the groove (15) after disengagement of the key (5) from the latter, when the switching ring (66) engages in a recess (27) of the eccentric ring (2) and arrests the same, via an outwardly projecting cam (62).

2. A key coupling of a rotary dobby according to Claim 1, characterised in that the springless keys (5, 50) carry out forced coupling and uncoupling movements.

3. A key coupling of a rotary dobby according to Claim 2, characterised in that the sides (52 and 520) of the two keys (5, 50) which face away from one another are parallel to one another and parallel to the central axis (75) which lies between them and which is at the same time the centre line of the groove (15) in the shaft when ready for engagement, the distance between said sides (52 and 520) corresponding at most to the width of the groove, measured in a direction circumferentially of the shaft.

4. A key coupling of a rotary dobby according to Claim 2 or 3 characterised in that the first guide rail (63) of the switching ring (66) is concentric to the drive shaft (1) in the centre position with the entraining keys (5, 50) engaging in a groove (15) of the shaft and rotating with the drive shaft (1), and the guide rail constantly engages a sliding groove (53) of the first key (5).

5. A key coupling of a rotary dobby according to Claim 2 or 3 characterised in that the second guide rail (64) of the switching ring (66) is, over almost its entire circumference, concentric to the drive shaft in the centre position of the switching arm (6), that is the position with the keys (5, 50) engaging in a shaft groove (15) and rotating with the drive shaft (1), and has, in the region of the shaft grooves (15) when ready for engagement in each case, an indentation (69) extending away from the drive shaft in the direction of movement, preferably with two lateral ramps (67) for moving back the holdback key (50).

6. A key coupling of a rotary dobby according to Claim 5, characterised in that the length of the hold-back key (50) is greater than the distance between the inner edge (65) of the second guide rail (64) at locations spaced from the indentations (69) and the circumferential surface of the drive shaft (1).

7. A key coupling of a rotary dobby according to Claim 3, characterised in that the facing side surfaces of the two keys (5, 50) are each inclined at the inner end.

8. A key coupling of a rotary dobby according to one of Claims 1–7 characterised in that on the periphery of the switching ring (66) there are diametrically opposed cams (62) and that on the eccentric ring (2) in the region of the cams there are arranged two noses (26) which form a recess (27) for said cams.

**Revendications**

1. Accouplement à clavettes entre l'arbre d'entraînement (1) d'une ratière rotative et une bague à excentrique (2) de cette ratière, calée à rotation libre sur ledit arbre, une bielle (3) étant montée sur la bague à excentrique, également à rotation libre, et l'accouplement présentant un bras sélecteur de commande (6) muni d'un anneau sélecteur (66) qui est approximativement concentrique à l'arbre d'entraînement et peut accomplir des pivotements alternatifs dans un plan radial par rapport à l'arbre d'entraînement, ainsi que deux clavettes (5, 50) qui agissent sur la même rainure (15) de l'arbre d'entraînement et peuvent effectuer des mouvements approximativement radiaux dans la bague à excentrique, l'une (5) des clavettes servant à entraîner la bague à excentrique, et l'autre clavette (50) servant respectivement à retenir la bague à excentrique ou à maintenir l'absence de jeu de la clavette d'entraînement (5) dans la rainure (15) de l'arbre d'entraînement (1), la clavette d'entraînement (5) étant commandée directement et la clavette de retenue (50) étant commandée indirectement, en tant qu'accouplement rétroactif, caractérisé par le fait que l'anneau sélecteur (66) comporte deux glissières de guidage (63, 64) coopérant chacune avec une clavette (5, 50), la première glissière de guidage (63) s'engageant directement dans la clavette d'entraînement (5) et commandant ainsi, concurremment au pivotement de l'anneau sélecteur, l'accouplement et le désaccouplement entre la bague à excentrique (2) et l'arbre d'entraînement (1), et la seconde glissière de guidage (64) reposant seulement par sa paroi interne (65) contre la clavette de retenue (50) qui, par suite de son mouvement périphérique avec la bague à exentrique (2), lorsque la clavette d'entraînement (5) est emboîtée dans la rainure (15), est dégagée d'une indentation (69) de la paroi interne (65) de la glissière de guidage (64) en étant par conséquent poussée vers l'intérieur, pour s'emboîter dans la même rainure (15), puis est de nouveau repoussée dans l'indentation (69) par l'arête circonférentielle (10) de la rainure, après le déboîtement de la clavette d'entraînement (5) hors de cette rainure (15), lorsque l'anneau sélecteur (66) s'encliquette, par l'intermédiaire d'un mentonnet (62) saillant radialement vers l'extérieur, dans une encoche (27) de la bague à excentrique (2), et bloque cette dernière.

2. Accouplement à clavettes d'une ratière rotative, selon la revendication 1, caractérisé par le fait que les clavettes (5, 50) dépourvues de ressorts accomplissent des mouvements forcés d'accouplement et de désaccouplement.

3. Accouplement à clavettes d'une ratière rotative, selon la revendication 2, caractérisé par le fait que les faces (52, respectivement 520) des deux clavettes (5, 50), qui sont tournées mutuellement à l'opposé, s'étendent parallèlement l'une à l'autre et parallèlement à l'axe médian intercalaire (75) qui matérialise simultanément la ligne centrale de la rainure (15) de l'arbre en attente d'encliquetage, la distance entre ces deux faces (52, respectivement 520) correspondant, au maximum, à la largeur de la rainure de l'arbre mesurée sur le pourtour de cet arbre.

4. Accouplement à clavettes d'une ratière rotative, selon la revendication 2 ou 3, caractérisé par le fait que la première glissière de guidage (63) de l'anneau sélecteur (66) est concentrique à l'arbre d'entraînement, dans la position centrale, lorsque les clavettes d'entraînement (5, 50) sont emboîtées dans une rainure (15) de l'arbre et tournent avec l'arbre d'entraînement (1), la glissière de guidage étant en prise permanente dans une rainure de coulissement (53) de la première clavette (5).

5. Accouplement à clavettes d'une ratière rotative, selon la revendication 2 ou 3, caractérisé par le fait que, dans la position centrale du bras sélecteur (6), c'est-à-dire la position dans laquelle les clavettes (5, 50) sont emboîtées dans une rainure (15) de l'arbre et tournent avec l'arbre d'entraînement (1), la seconde glissière de guida-

**0 151 655**

ge (64) de l'anneau sélecteur (66) est, approximativement sur toute sa périphérie, concentrique à l'arbre d'entraînement et présente, au voisinage des rainures (15) de l'arbre en attente d'encliquetage, une indentation respective (69) qui s'étend vers la direction du mouvement de l'arbre d'entraînement et est munie, de préférence, de deux rampes latérales (67) pour inverser la commande de la clavette de retenue (50).

6. Accouplement à clavettes d'une ratière rotative, selon la revendication 5, caractérisé par le fait que la longueur de la clavette de retenue (50) est plus grande que la distance comprise entre l'arête interne (65) de la seconde glissière de guidage (64), extérieurement aux indentations (69), et la surface périphérique de l'arbre d'entraînement (1).

7. Accouplement à clavettes d'une ratière rotative, selon la revendication 3, caractérisé par le fait que les surfaces latérales des deux clavettes (5, 50), qui sont tournées l'une vers l'autre, sont respectivement biseautées à leur extrémité interne.

8. Accouplement à clavettes d'une ratière rotative, selon l'une des revendications 1 à 7, caractérisé par le fait qu'un mentonnet respectif (62) et, au voisinage de celui-ci, sur la bague à excentrique (2), deux becs (26) formant une encoche (27) pour ce mentonnet, occupent des positions diamétralement opposées à la périphérie de l'anneau sélecteur (66).

**Fig.1**

Fig.2

Fig.8

**Fig.3**

**Fig.4**

**Fig.5**

**Fig.6**

**Fig.7**

Fig.10

Fig.12

Fig.9

Fig.11